# EUROPEAN PATENT APPLICATION

(11) **EP 4 498 710 A1**
(43) Date of publication of application: **29.01.2025**
(21) Application number: 22932601.2
(22) Date of filing: 22.03.2022
(51) Int. Cl.: H04W 4/38, H04W 4/70

(54) **PROCESSING METHOD AND APPARATUS FOR COMMUNICATION AND SENSING SERVICE, COMMUNICATION DEVICE, AND STORAGE MEDIUM**

(71) Applicant: Beijing Xiaomi Mobile Software Co., Ltd., Beijing 100085 (CN)
(72) Inventor: SHEN, Yang, Beijing 100085 (CN)
(74) Representative: Dehns Germany Partnerschaft mbB
(86) International application number: PCT/CN2022/082359
(87) International publication number: WO 2023/178532

(57) **Abstract**

Embodiments of the present disclosure provide a processing method for a communication and sensing service. The method is executed by a first network element. The method comprises: determining a transmission mode for transmitting communication and sensing data, wherein the communication and sensing data is the data of at least one source transmitted in the process of executing the communication and sensing service, and the transmission mode is a mode that is determined from a first mode for transmitting the communication and sensing data on the basis of a control plane, and a second mode for transmitting the communication and sensing data on the basis of a user plane.

## Description

### TECHNICAL FIELD

The present disclosure relates to the field of wireless communication technology but is not limited to the field of wireless communication technology, and in particular to a method, apparatus, communication device, and storage medium for processing a sensing service.

### BACKGROUND

Wireless sensing technology aims to obtain information about remote objects and their characteristics without physical contact. In this way, sensing data of the object and its surroundings can be used for analysis to obtain meaningful information about the object and its characteristics. As an example, processing the sensing data may be a process for combining the sensing data from at least one source to obtain a sensing result, so that the uncertainty of the sensing result is lower than the uncertainty that may occur when using these sources alone.

In related technologies, wireless sensing technology may be coordinated with wireless networks, and how to achieve coordinations between the two is a problem that needs to be considered.

### SUMMARY

Embodiments of the present disclosure provide a method and apparatus for processing a sensing service, a communication device, and a storage medium.

According to a first aspect of embodiments of the present disclosure, a method for processing a sensing service is provided. The method is performed by a first network element, and the method includes:
determining a transmission mode for transmitting sensing data, where
the sensing data is data from at least one source transmitted during the execution of the sensing service; and
the transmission mode is a mode determined from a first mode for transmitting the sensing data based on a control plane and a second mode for transmitting the sensing data based on a user plane.

In an embodiment, determining the transmission mode for transmitting the sensing data includes:
determining the transmission mode for transmitting the sensing data based on predetermined information.

In an embodiment, the method further includes:
determining a candidate mode for executing the sensing service from a predetermined processing mode for the sensing data based on the predetermined information, where the predetermined processing mode includes at least one of the following:
a first mode, which is a mode for processing the sensing data based on a terminal;
a second mode, which is a mode for processing the sensing data based on a base station; or
a third mode, which is a mode for processing the sensing data based on a network.

In an embodiment, the predetermined information includes at least one of the following:
service authorization information of a terminal or a base station;
user consent information;
information about capability and/or current status of a terminal, a base station, or a core network;
information about a sensing service request; or
information about a pre-configured processing mode for the sensing data allowed by an operator.

In an embodiment, the method further includes:
receiving the information about the sensing service request sent by a sensing application server.

In an embodiment, the method further includes:
in response to determining that the candidate mode is the third mode and determining that the transmission mode is the mode for transmitting the sensing data based on the user plane, determining a second network element, where the third mode is a mode for processing the sensing data based on the network.

In an embodiment, the method further includes:
determining a predetermined sensing mode, a transmitter and/or a receiver.

In an embodiment, the method further includes:
generating a sensing strategy for the transmitter and/or the receiver, where the sensing strategy is used to execute the sensing service; and
sending the sensing strategy to the transmitter and/or the receiver.

In an embodiment, the method further includes:
in response to determining that the candidate mode is the third mode, determining that the transmission mode is the mode for transmitting the sensing data based on the user plane, and a receiver of the sensing service being a terminal, establishing a PDU session between the terminal and the second network element; or
in response to determining that the candidate mode is the third mode, determining that the transmission mode is the mode for transmitting the sensing data based on the user plane, and the receiver of the sensing service being a base station, establishing a PDU session between the base station and the second network element.

In an embodiment, the method further includes:
receiving result information of the sensing service.

In an embodiment, the method further includes:
sending the result information of the sensing service to a sensing application server.

According to a second aspect of embodiments of the present disclosure, a method for processing a sensing service is provided. The method is performed by a third network element, and the method includes:
sending information about a sensing service request to a first network element, where
the information about the sensing service request is used for the first network element to determine a transmission mode for transmitting sensing data;
the sensing data is data from at least one source transmitted while the execution of the sensing service; and
the transmission mode is a mode determined from a first mode for transmitting the sensing data based on a control plane and a second mode for transmitting the sensing data based on a user plane.

In an embodiment, the method further includes:
receiving result information of the sensing service.

According to a third aspect of embodiments of the present disclosure, an apparatus for processing a sensing service is provided. The apparatus includes:
a determination module, configured to determine a transmission mode for transmitting sensing data, where
the sensing data is data from at least one source transmitted during the execution of the sensing service; and
the transmission mode is a mode determined from a first mode for transmitting the sensing data based on a control plane and a second mode for transmitting the sensing data based on a user plane.

According to a fourth aspect of embodiments of the present disclosure, an apparatus for processing a sensing service is provided. The processing includes:
a sending module, configured to send information about a sensing service request to a first network element, where
the information about the sensing service request is used for the first network element to determine a transmission mode for transmitting sensing data;
the sensing data is data from at least one source transmitted during the execution of the sensing service; and
the transmission mode is a mode determined from a first mode for transmitting the sensing data based on a control plane and a second mode for transmitting the sensing data based on a user plane.

According to a fifth aspect of embodiments of the present disclosure, a communication device is provided. The communication device includes:
a processor; and
a memory for storing instructions executable by the processor.

The processor is configured to implement the method described in any embodiment of the present disclosure when running the executable instructions.

According to a sixth aspect of embodiments of the present disclosure, a computer storage medium is provided. The computer storage medium stores a computer executable program. The executable program is configured to implement the method described in any embodiment of the present disclosure when executed by the processor.

In embodiments of the present disclosure, a transmission mode for transmitting sensing data is determined; the sensing data is data from at least one source transmitted during the execution of a sensing service; and the transmission mode is a mode determined from a first mode for transmitting the sensing data based on a control plane and a second mode for transmitting the sensing data based on a user plane. In this way, it can be clearly determined whether the transmission mode for transmitting the sensing data is the first mode or the second mode, and each execution entity for executing the sensing service can execute the sensing service based on whether the transmission mode is the first mode or the second mode. This makes the execution process of the sensing service more efficient and reliable compared to the situation where the specific transmission mode cannot be determined.

### BRIEF DESCRIPTION OF THE DRAWINGS

FIG. 1 is a schematic structural diagram of a wireless communication system according to an example embodiment.
FIG. 2 is a schematic diagram for processing a sensing service according to an example embodiment.
FIG. 3 is a schematic diagram for processing a sensing service according to an example embodiment.
FIG. 4 is a schematic diagram for processing a sensing service according to an example embodiment.
FIG. 5 is a schematic diagram for processing a sensing service according to an example embodiment.
FIG. 6 is a schematic diagram for processing a sensing service according to an example embodiment.
FIG. 7 is a schematic diagram for processing a sensing service according to an example embodiment.
FIG. 8 is a schematic diagram for processing a sensing service according to an example embodiment.
FIG. 9 is a schematic diagram for processing a sensing service according to an example embodiment.
FIG. 10 is a schematic diagram for processing a sensing service according to an example embodiment.
FIG. 11 is a schematic diagram for processing a sensing service according to an example embodiment.
FIG. 12 is a schematic diagram for processing a sensing service according to an example embodiment.
FIG. 13 is a schematic diagram of an architecture for processing a sensing service according to an example embodiment.
FIG. 14 is a schematic diagram of an architecture for processing a sensing service according to an example embodiment.
FIG. 15 is a flowchart of a method for processing a sensing service according to an example embodiment.
FIG. 16 is a flowchart of a method for processing a sensing service according to an example embodiment.
FIG. 17 is a flowchart of a method for processing a sensing service according to an example embodiment.
FIG. 18 is a flowchart of a method for processing a sensing service according to an example embodiment.
FIG. 19 is a flowchart of a method for processing a sensing service according to an example embodiment.
FIG. 20 is a flowchart of a method for processing a sensing service according to an example embodiment.
FIG. 21 is a flowchart of a method for processing a sensing service according to an example embodiment.
FIG. 22 is a flowchart of a method for processing a sensing service according to an example embodiment.
FIG. 23 is a flowchart of a method for processing a sensing service according to an example embodiment.
FIG. 24 is a schematic structural diagram of an apparatus for processing a sensing service according to an example embodiment.
FIG. 25 is a schematic structural diagram of an apparatus for processing a sensing service according to an example embodiment.
FIG. 26 is a flowchart of a method for processing a sensing service according to an example embodiment.
FIG. 27 is a schematic structural diagram of a terminal according to an example embodiment.
FIG. 28 is a block diagram of a base station according to an example embodiment.

### DETAILED DESCRIPTION OF THE EMBODIMENTS

Here, example embodiments will be described in detail, instances of which are shown in the accompanying drawings. When the following description refers to the drawings, unless otherwise indicated, the same numbers in different drawings represent the same or similar elements. The embodiments described in the following example embodiments do not represent all embodiments consistent with the embodiments of the present disclosure. Instead, they are only examples of apparatus, devices, and methods consistent with some aspects of the embodiments of the present disclosure as detailed in the attached claims.

The terms used in the embodiments of the present disclosure are only for the purpose of describing specific embodiments and are not intended to limit the embodiments of the present disclosure. The singular forms "one" and "the" used in the embodiments of the present disclosure and the attached claims are also intended to include the plural forms, unless the context clearly indicates other meanings. It should also be understood that the term "and/or" used herein refers to and includes any or all possible combinations of one or more associated items as listed.

It should be understood that although the terms first, second, third, etc. may be used in the embodiments of the present disclosure to describe various information, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to that".

For the purpose of simplicity and ease of understanding, the terms used herein to characterize the size relationship are "greater than" or "less than". However, for those skilled in the art, it may be understood that the term "greater than" also covers the meaning of "greater than or equal to", and "less than" also covers the meaning of "less than or equal to".

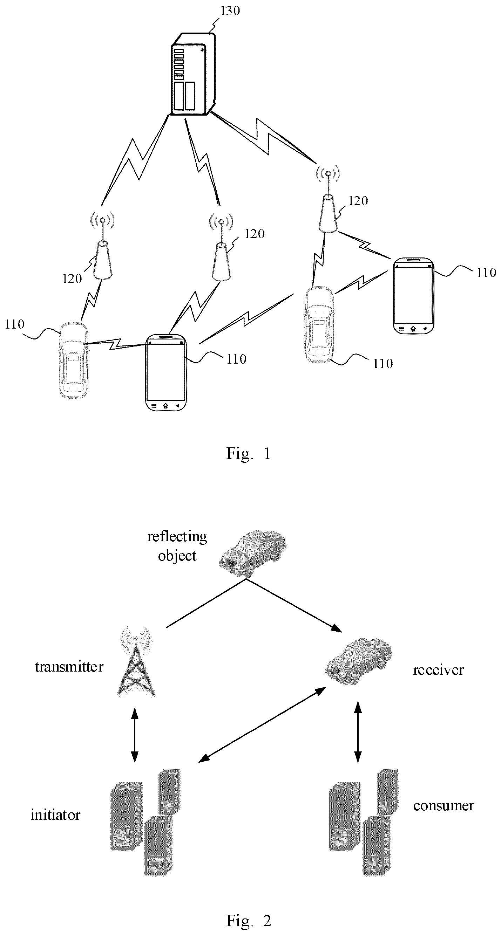

Reference may be made to FIG. 1, which shows a schematic structural diagram of a wireless communication system provided by an embodiment of the present disclosure. As shown in FIG. 1, the wireless communication system is a communication system based on mobile communication technology, and the wireless communication system may include a number of user equipments 110 and a number of base stations 120.

The user equipment 110 may be a device that provides voice and/or data connectivity to a user. The user equipment 110 may communicate with one or more core networks via a radio access network (RAN). The user equipment 110 may be an Internet of Things user equipment, such as a sensor device, a mobile phone, and a computer with an Internet of Things user equipment. For example, the user equipment may be a fixed, portable, pocket-sized, handheld, computer-built-in or vehicle-mounted device. For example, it may be a station (STA), subscriber unit, subscriber station, mobile station, mobile, remote station, access point, remote terminal, access terminal, user terminal, user agent, user device, or user equipment. Alternatively, the user equipment 110 may also be a device of an unmanned aerial vehicle. Alternatively, the user equipment 110 may also be a vehicle-mounted device, such as a driving computer with wireless communication function, or a wireless user device connected to an external driving computer. Alternatively, the user equipment 110 may also be a roadside device, such as a street lamp, a signal lamp, or other roadside device with wireless communication function.

The base station 120 may be a network-side device in a wireless communication system. The wireless communication system may be a 4th generation mobile communication (4G) system, also known as a long term evolution (LTE) system. Alternatively, the wireless communication system may be a 5G system, also known as a new air interface system or a 5G NR system. Alternatively, the wireless communication system may be a next generation system of the 5G system. The access network in the 5G system may be referred to as New Generation-Radio Access Network (NG-RAN).

The base station 120 may be an evolved base station (eNB) used in a 4G system. Alternatively, the base station 120 may also be a base station (gNB) using a centralized distributed architecture in a 5G system. When the base station 120 uses a centralized distributed architecture, it generally includes a centralized unit (CU) and at least two distributed units (DUs). The centralized unit is provided with a protocol stack of a packet data convergence protocol (PDCP) layer, a radio link control (RLC) layer, and a media access control (MAC) layer. The distributed unit is provided with a physical (PHY) layer protocol stack. The specific implementations of the base station 120 are not limited in the embodiments of the present disclosure.

A wireless connection may be established between the base station 120 and the user equipment 110 through a wireless air interface. In different implementations, the wireless air interface is a wireless air interface based on the fourth generation mobile communication network technology (4G) standard. Alternatively, the wireless air interface is a wireless air interface based on the fifth generation mobile communication network technology (5G) standard. For example, the wireless air interface is a new air interface. Alternatively, the wireless air interface may also be a wireless air interface based on the next generation mobile communication network technology standard of 5G.

In some embodiments, an End to End (E2E) connection may also be established between the user equipments 110, for example, vehicle to vehicle (V2V) communication, vehicle to infrastructure (V2I) communication, and vehicle to pedestrian (V2P) communication in vehicle to everything (V2X) communication.

Here, the user equipment may be considered as the terminal device in the following embodiments.

In some embodiments, the wireless communication system may also include a network management device 130.

Several base stations 120 are respectively connected to the network management device 130. The network management device 130 may be a core network device in the wireless communication system. For example, the network management device 130 may be a mobility management entity (MME) in the evolved packet core (EPC). Alternatively, the network management device may also be other core network devices, such as a Serving GateWay (SGW), a Public Data Network GateWay (PGW), a Policy and Charging Rules Function (PCRF), or a Home Subscriber Server (HSS). The embodiments of the present disclosure do not limit the implementations of the network management device 130.

In order to facilitate the understanding of those skilled in the art, the embodiments of the present disclosure list various implementations to clearly illustrate the technical solution of the embodiments of the present disclosure. It shall be noted, those skilled in the art may understand that multiple embodiments provided in the embodiments of the present disclosure may be executed separately, or executed together with the methods in other embodiments of the embodiments of the present disclosure, or executed separately or in combination with some methods in other related technologies. The embodiments of the present disclosure are not limited in this regard.

In order to better understand the technical solution described in any embodiment of the present disclosure, the application scenario in the related technology is firstly described.

In an embodiment, radar (radio detection and ranging) is a widely-used wireless sensing technology that uses radio waves to determine the distance (range), angle, or instantaneous linear velocity of an object. There are other sensing technologies, including non-RF sensing sensors, which have been used in other areas, such as time-of-flight cameras, accelerometers, gyroscopes, and lidar.

Integrated sensing and communication in the fifth generation mobile communication technology (5G) means that the sensing capability is provided by the new air interface wireless communication system and infrastructure used for communication, and the sensing information may come from RF and/or non-RF based sensing sensors. In general, communication-assisted sensing scenarios may be involved. For example, 5G communication systems provide sensing services or sensing-assisted communication. For example, sensing information related to the communication channel or environment is used to improve the communication services of the 5G system itself. For example, the sensing information may be used to assist in radio resource management, interference mitigation, beam management, and mobility.

In multiple market segments and verticals, 5G-based sensing services may benefit smart transportation, aviation, enterprises, smart cities, smart homes, factories, consumer applications, and public sectors, etc.

Mobile operators may play an important role in providing customers with integrated sensing and communication based on 5G systems, including the management and control related technologies of sensing services based on 5G, which illustrate the role that operators may play in enhancing V2X type services, especially for infrastructure-assisted environmental sensing, infrastructure-based remote control driving, high-definition map collection and sharing, and remote control driving support.

**In** some embodiments, examples of communication-assisted sensing services provided by 5G systems may include the following instances.

Real-time environmental monitoring: reconstructing environmental maps using wireless signals to further improve positioning accuracy and enable environmental related applications, such as implementing a series of real-time monitoring related applications, including dynamic 3D maps for assisted driving, pedestrian flow statistics, intrusion detection, traffic detection, etc.

Autonomous vehicles or drones: autonomous vehicles or drone applications have some common functional requirement. For example, autonomous vehicles or drones should support detection and avoidance to avoid obstacles. At the same time, autonomous vehicles or drones should have the ability to monitor path information, such as selecting routes and complying with traffic rules.

Air pollution monitoring: the quality of the received wireless signal shows different attenuation characteristics with changes in air humidity, air particle concentration, carrier frequency, etc., which may be used for weather or air quality detection.

Indoor health care and intrusion detection: this may be used to realize breathing rate estimation, breathing depth estimation, apnea detection, vital sign monitoring of the elderly, and indoor intrusion detection.

**In** some embodiments, sensing of the wireless communication channel and environment may further improve the performance of the communication system. Some examples of sensing-assisted communication scenarios include the following instances:
the location and channel environment of the sensing terminal, for narrowing the beam scanning range and shortening the beam training time;
the location, speed, motion trajectory, and channel environment of the sensing terminal, used for beam prediction to reduce the overhead in beam measurement and the delay in beam tracking;
the property and channel environment of the sensing terminal, for improving the performance of channel estimation.

In an embodiment, see FIG. 2, there are different roles in the sensing system, as follows.

Reflecting object: a target object whose information is communicated and sensed.

Transmitter: a device that transmits a radio signal to a target object. It may be a terminal or a base station.

Receiver: a device that detects sensing information based on the reflected signal of the radio signal from the target object. It may be a terminal or a base station.

Initiator: an authorized device that requests or subscribes to sensing information from one or more receivers. It may be a terminal, a base station, or a network function. It is generally a device that collects sensing information and processes it to produce a sensing result.

Consumer: it consumes the output calculated from the sensing information. For example, it may be a terminal application or a sensing application server.

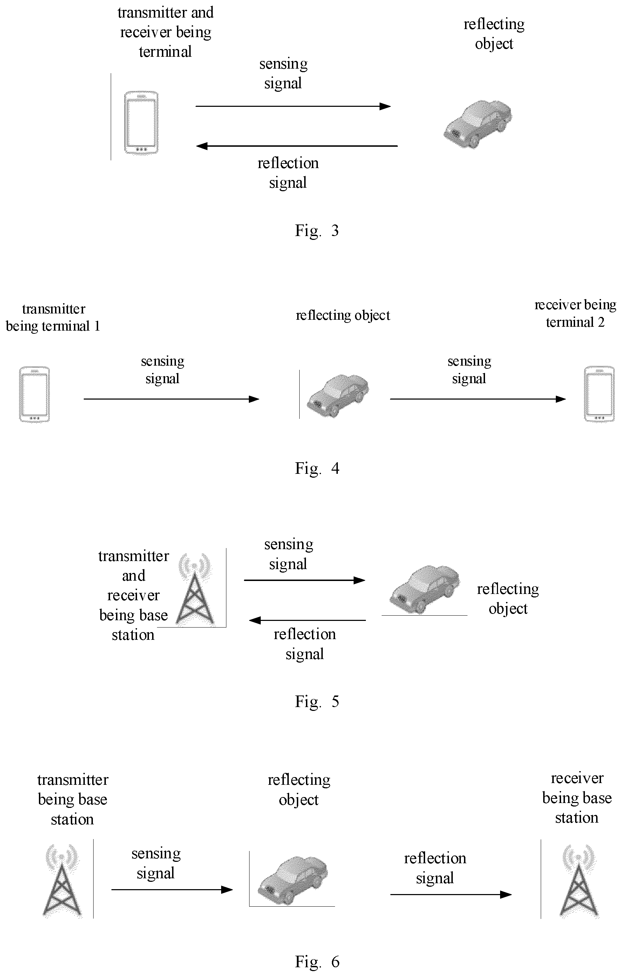

It should be noted that the transmitter, receiver, initiator, and consumer may be placed together in pairs or all together. Reference may be made to FIGS. 3 to 8. There are 6 combinations about whether the terminal or base station may be used as a transmitter or receiver in the integrated sensing and communication service.

It should be noted that the sensing mode involved in the present disclosure may include modes of terminal transmission and terminal reception, base station transmission and base station reception, or mixed transmission and reception by terminal and base station.

Sensing fusion is a process for combining sensing data from different sources to obtain a sensing result, so that the uncertainty in the sensing result is lower than the uncertainty that may occur when these sources are used alone. Sensing fusion may also be understood as sensor fusion and perception fusion, etc., which are not limited here.

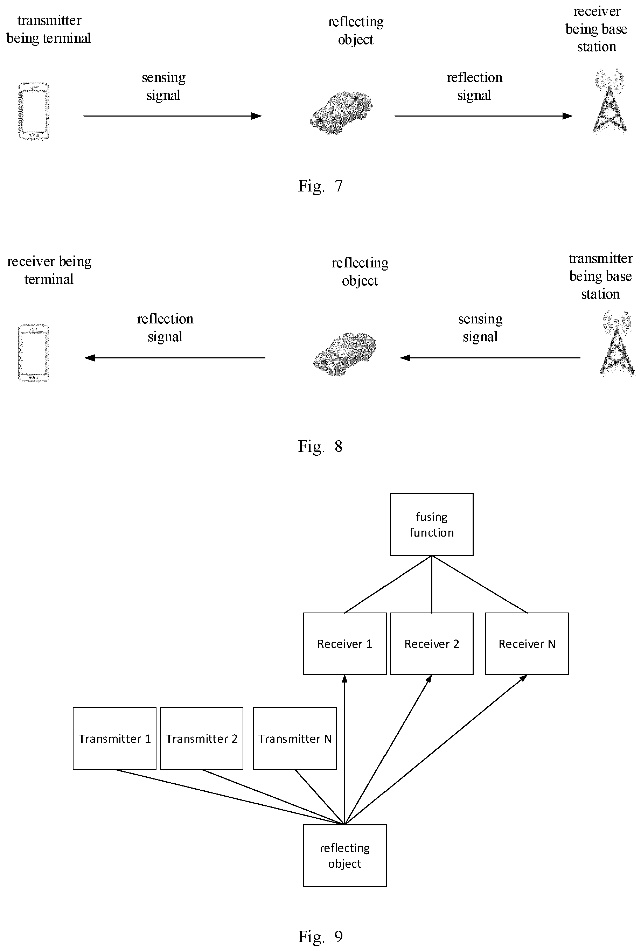

Reference may be made to FIG. 9, which is an overall fusion architecture, where the fusion function collects sensing information from multiple receivers.

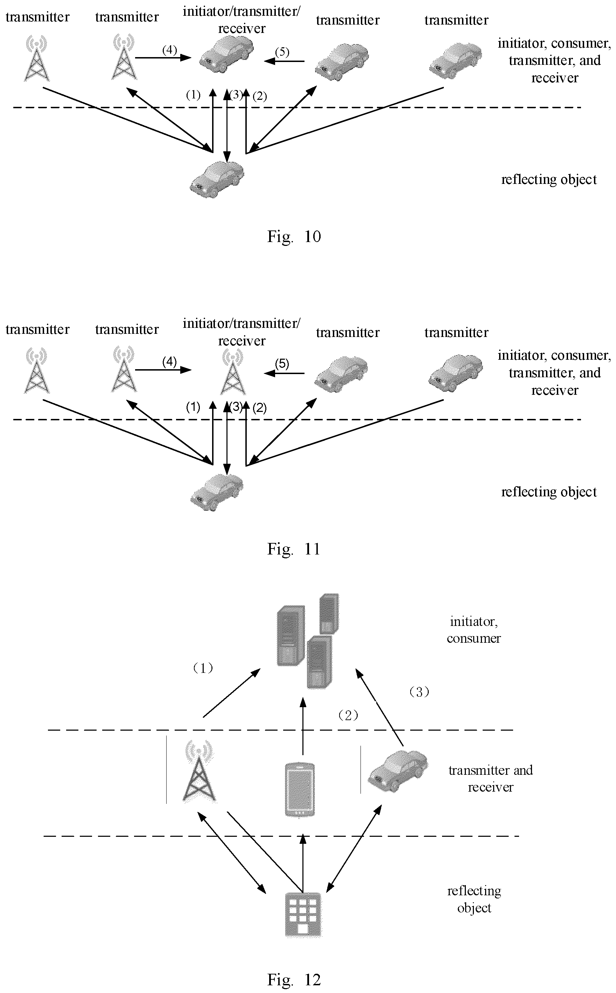

The fusion function may be in the terminal, base station, network function, or application server. Depending on which entity performs the fusion function, there may be 4 fusion modes, as follows:
terminal-based fusion: the terminal performs the fusion function, see FIG. 10 for details;
base station-based fusion: the base station performs the fusion function, see FIG. 11 for details;
network function-based fusion: the network function performs the fusion function, see FIG. 12 for details; and
application-based fusion: the application server performs the fusion function, see FIG. 12 again for details.

In an embodiment, the following aspects need to be considered for supporting integrated sensing and communication in the network core network:
1. sensing by operators using licensed frequencies control;
2.network assistance and coordination for sensing;
3. determination of sensing mode;
4. discovery and selection of transmitters and receivers;
5. service exposure or service triggering; and
6.data collection when sensing information is aggregated and processed at the network side (for example, when fusion is required).

The above aspects 1 to 5 are implemented by control plane functions, and the above aspect 6 may be implemented in control plane or user plane.

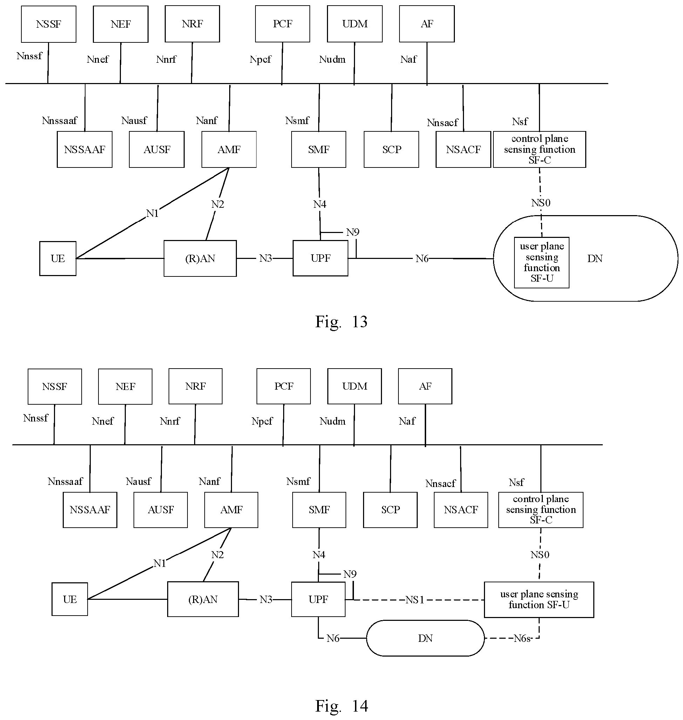

In an embodiment, the control plane sensing function SF-C and the user plane sensing function SF-U are introduced into the core network to support integrated sensing and communication. SF-C is a control plane network function responsible for processing control plane signaling. SF-U is a user plane entity responsible for data collection, aggregation, and processing under the control of SF-C. See FIG. 13, where SF-U may be an application server in the data network DN. See FIG. 14, where SF-U may also be a core network element.

In an embodiment, NS0 is the interface between SF-C and SF-U, used for controlling data collection, aggregation, and processing. SF-C and SF-U may be co-located, in which case NS0 is an internal interface. NS1 is the interface between UPF and SF-U, used for transmiting sensing information between UPF and SF-U. N6s is used for interactions between SF-U and the sensing application in DN.

In an embodiment, SF-U is only applicable when network-based sensing is used. When SF-U is not applicable, NS0 is also not applicable.

In an embodiment, when network-based sensing is determined and data collection is determined to be on the user plane, SF-C needs to perform the following:
1. SF-U selection;
2. establishment of a PDU session between gNB and SF-U.

In an embodiment, SF-C is responsible for determining the mode for processing sensing information (*i.e.,* terminal-based sensing, base station-based sensing, or network-based sensing) based on the capability of the terminal, base station, or network and the sensing application requirement (e.g., quality of service QoS, including delay and accuracy).

In an embodiment, SF-C is responsible for determining whether to use the control plane or the user plane to transmit sensing information to the network based on the capability of the terminal, base station, or network and the sensing application requirement (e.g., QoS, including delay and accuracy).

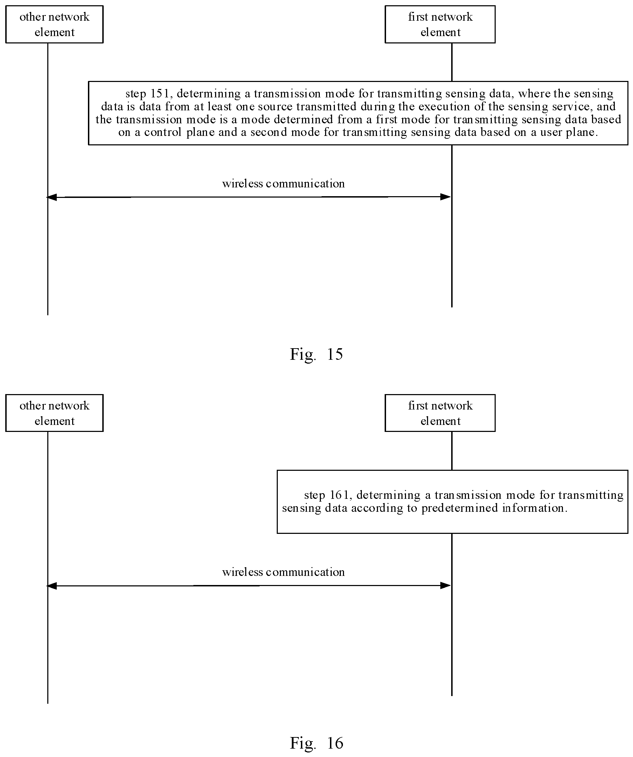

As shown in FIG. 15, a method for processing a sensing service is provided in an embodiment. The method is performed by a first network element, and the method includes:
step 151, determining a transmission mode for transmitting sensing data.

The sensing data is data from at least one source transmitted during the execution of the sensing service. The transmission mode is a mode determined from a first mode for transmitting sensing data based on a control plane and a second mode for transmitting sensing data based on a user plane.

Here, the terminal involved in the present disclosure may be, but is not limited to, a mobile phone, a wearable device, a vehicle terminal, a road side unit (RSU), a smart home terminal, an industrial sensor device and/or a medical device, etc. In some embodiments, the terminal may be a Redcap terminal or a predetermined version of new air interface NR terminal (for example, an NR terminal of R17).

The base station involved in the present disclosure may be various types of base stations, for example, a base station of a third generation mobile communication (3G) network, a base station of a fourth generation mobile communication (4G) network, a base station of a fifth generation mobile communication (5G) network, or other evolved base stations.

The network element involved in the present disclosure may be access control and mobility management function (AMF), control plane sensing function (SF-C), unified data management (UDM), sensing application (Sensing App), etc. It should be noted that the network element is not limited to the above examples, and may also be any network element with sensing function (SF). In some embodiments of the present disclosure, the network element with SF may be deployed as a communication node alone, or may be uniformly deployed in an existing network element. In short, the network element with SF may be understood as a logical node that can be flexibly deployed in a network, which is not limited here.

In an embodiment, the first network element may be a control plane sensing function SF-C.

In an embodiment, the predetermined processing mode for the sensing data may include at least one of the following:
a first mode, which is a mode for processing sensing data based on a terminal;
a second mode, which is a mode for processing sensing data based on a base station;
a third mode, which is a mode for processing sensing data based on a core network element; or
a mode for processing sensing data based on an application server.

Here, the above modes may be further subdivided according to the difference of the receiver and/or the transmitter, which is not limited here.

It should be noted that the third mode may also be collectively referred to as a mode for processing the sensing data based on the network. Fusion of the sensing data may also be referred to as sensing data fusion, which is a kind of sensing data processing. But it should be noted that the sensing data processing is not limited to the sensing data fusion, but may also be the processing of sensing data in any other scenario.

It should be noted that sensing data processing may be: a process for combining sensing data from at least one source to obtain a sensing result, so that the uncertainty in the sensing result is lower than the uncertainty that may occur when these sources are used alone; and/or, a process for analyzing and/or calculating the sensing data to obtain a sensing result.

In an embodiment, the transmission mode for transmitting the sensing data is determined to be a first mode for transmitting the sensing data based on the control plane. The sensing data is transmitted based on the first mode.

In an embodiment, the transmission mode for transmitting sensing data is determined to be a second mode for transmitting sensing data based on the user plane. Sensing data is transmitted based on the second mode.

In an embodiment, a candidate mode for executing the sensing service is determined from a predetermined processing mode for the sensing data. The transmission mode for transmitting the sensing data is determined. The sensing data is data from at least one source transmitted during the execution of the sensing service. The transmission mode is a mode determined from a first mode for transmitting sensing data based on a control plane and a second mode for transmitting sensing data based on a user plane. In the process of executing the sensing service based on the candidate mode, each execution entity transmits the sensing data based on the determined transmission mode. Here, at least one source may be one or more sources, and the "source" may be understood as the provider of the sensing data, which may be a terminal, a base station, or a receiver, etc.

In an embodiment, the candidate mode for executing the sensing service is determined from a predetermined processing mode for the sensing data. The transmission mode for transmitting the sensing data is determined as the first mode for transmitting sensing data based on the control plane. In the process of executing the sensing service based on the candidate mode, each execution entity transmits the sensing data based on the determined first mode.

In an embodiment, the candidate mode for executing the sensing service is determined from the predetermined processing mode for the sensing data. The transmission mode for transmitting the sensing data is determined as the second mode for transmitting sensing data based on the user plane. In the process of executing the sensing service based on the candidate mode, each execution entity transmits the sensing data based on the determined second mode.

In an embodiment, based on predetermined information, the candidate mode for executing the sensing service is determined from the predetermined processing mode for the sensing data. The transmission mode for transmitting sensing data is determined. The sensing data is data from at least one source transmitted during the execution of the sensing service. The transmission mode is a mode determined from a first mode for transmitting sensing data based on the control plane and a second mode for transmitting sensing data based on the user plane. In the process of executing the sensing service based on the candidate mode, each execution entity transmits the sensing data based on the determined transmission mode.

In an embodiment, the predetermined information includes at least one of the following:
service authorization information of the terminal or base station;
user consent information;
information about the capability and/or current status of the terminal, base station, or core network, where the information about the current status includes the current load information of the terminal, base station, or core network;
information about the sensing service request;
information about the pre-configured processing mode for the sensing data allowed by the operator.

It should be noted that information about the sensing service request sent by the sensing application server may be received.

In an embodiment, the transmission mode for transmitting sensing data is determined. The sensing data is data from at least one source transmitted during the execution of the sensing service. The transmission mode is a mode determined from a first mode for transmitting sensing data based on the control plane and a second mode for transmitting sensing data based on the user plane. In response to determining that the candidate mode is a third mode and determining that the transmission mode is the mode for transmitting sensing data based on the user plane, a second network element is determined, where the third mode is a mode for processing sensing data based on a network, and the second network element may be a user plane sensing function. Determining the second network element may include the SF-C selecting an SF-U.

In an embodiment, a predetermined sensing mode, a transmitter and/or a receiver is determined. As an example, a candidate mode for executing the sensing service is determined from a predetermined processing mode for the sensing data. The transmission mode for transmitting sensing data is determined. The sensing data is data from at least one source transmitted during the execution of the sensing service. The transmission mode is a mode determined from a first mode for transmitting sensing data based on the control plane and a second mode for transmitting sensing data based on the user plane. In response to determining that the candidate mode is the third mode and determining that the transmission mode is a mode for transmitting sensing data based on the user plane, a second network element is determined, where the third mode is a mode for processing sensing data based on the network. The predetermined sensing mode, a transmitter and/or a receiver is determined. A sensing strategy for the transmitter and/or the receiver is generated, where the sensing strategy is used to execute the sensing service. The sensing strategy is sent to the transmitter and/or the receiver. It should be noted that the sensing data from different sources may be sensing data acquired by different receivers, where the receiver may be a terminal and/or a base station, etc.

In an embodiment, the sensing strategy indicates the candidate mode and the transmission mode.

In an embodiment, the candidate mode for executing the sensing service is determined from a predetermined processing mode for the sensing data. The transmission mode for transmitting sensing data is determined. The sensing data is data from at least one source transmitted during the execution of the sensing service. The transmission mode is a mode determined from a first mode for transmitting sensing data based on the control plane and a second mode for transmitting sensing data based on the user plane. In response to determining that the candidate mode is the third mode and determining that the transmission mode is a mode for transmitting sensing data based on the user plane, a second network element is determined, where the third mode is a mode for processing sensing data based on the network. In response to determining that the candidate mode is the third mode, determining that the transmission mode is a mode for transmitting sensing data based on the user plane, and a receiver of the sensing service being a terminal, a PDU session is established between the terminal and the second network element. Data transmission is performed during the execution of the sensing service based on the PDU session.

In an embodiment, the candidate mode for executing the sensing service is determined from a predetermined processing mode for the sensing data. The transmission mode for transmitting sensing data is determined. The sensing data is data from at least one source transmitted during the execution of the sensing service. The transmission mode is a mode determined from a first mode for transmitting sensing data based on the control plane and a second mode for transmitting sensing data based on the user plane. In response to determining that the candidate mode is the third mode and determining that the transmission mode is a mode for transmitting sensing data based on the user plane, a second network element is determined, where the third mode is a mode for processing sensing data based on the network. In response to determining that the candidate mode is the third mode, determining that the transmission mode is a mode for transmitting sensing data based on the user plane, and a receiver of the sensing service being the base station, a PDU session is established between the base station and the second network element. Data transmission is performed during the execution of the sensing service based on the PDU session.

In an embodiment, the candidate mode for executing the sensing service is determined from a predetermined processing mode for the sensing data. The transmission mode for transmitting sensing data is determined. The sensing data is data from at least one source transmitted during the execution of the sensing service. The transmission mode is a mode determined from a first mode for transmitting sensing data based on the control plane and a second mode for transmitting sensing data based on the user plane. In the process of executing the sensing service based on the candidate mode, each execution entity transmits the sensing data based on the determined transmission mode. Result information of the sensing service is received. The result information is sent to a sensing application server.

In an embodiment of the present disclosure, a transmission mode for transmitting sensing data is determined. The sensing data is data from at least one source transmitted during the execution of the sensing service. The transmission mode is a mode determined from a first mode for transmitting sensing data based on a control plane and a second mode for transmitting sensing data based on a user plane. In this way, it can be clearly determined whether the transmission mode for transmitting sensing data is the first mode or the second mode, and each execution entity of the sensing service can execute the sensing service based on whether the transmission mode is the first mode or the second mode. This makes the execution process of the sensing service more efficient and reliable compared to the situation where the specific transmission mode cannot be determined.

It should be noted, those skilled in the art may understand that the method provided in the embodiments of the present disclosure may be performed alone or together with some methods in the embodiments of the present disclosure or some methods in related technologies.

As shown in FIG. 16, a method for processing a sensing service is provided in an embodiment, where the method is performed by a first network element, and the method includes:
step 161, determining a transmission mode for transmitting sensing data according to predetermined information.

In an embodiment, the predetermined information includes capability information of a terminal, a base station and/or a network. It can be determined whether the transmission mode for transmitting sensing data is the first mode or the second mode according to the capability indicated by the capability information of the terminal, the base station and/or the network. As an example, if the capability of the network does not support the transmission of a large amount of data on the control plane, it can be determined that the transmission mode for transmitting sensing data is the second mode for transmitting sensing data through the user plane. Alternatively, if the capability of the network supports the transmission of a large amount of data on the control plane, it can be determined that the transmission mode for transmitting sensing data is the first mode for transmitting sensing data through the control plane.

It should be noted that if the capability of the network supports the transmission of a large amount of data on both the control plane and the user plane, the transmission mode can be determined according to the quality of service QoS of the control plane and the user plane. As an example, if the QoS when transmitting a large amount of data through the control plane is lower than the QoS when transmitting a large amount through the user plane, the second mode can be used to transmit the sensing data. Alternatively, if the QoS when transmitting a large amount of data through the control plane is higher than the QoS when transmitting a large amount of data through the user plane, the first mode can be used to transmit the sensing data.

In an embodiment, the predetermined information includes information about the sensing application requirement. The required parameter indicated by the information about the sensing application requirement can be used to determine whether the transmission mode for transmitting the sensing data is the first mode or the second mode.

In an embodiment, the required parameter is a delay parameter. In response to the delay in transmitting the sensing data through the control plane being less than the delay in transmitting the sensing data through the user plane, the first mode can be used to transmit the sensing data. Alternatively, in response to the delay in transmitting the sensing data through the control plane being greater than the delay in transmitting the sensing data through the user plane, the second mode can be used to transmit the sensing data.

In an embodiment, the required parameter is a delay parameter. In response to the required delay being less than the delay in transmitting the sensing data through the user plane and greater than the delay in transmitting the sensing data through the control plane, the first mode can be used to transmit the sensing data. Alternatively, in response to the required delay being greater than the delay in transmitting the sensing data through the user plane and less than the delay in transmitting the sensing data through the control plane, the sensing data can be transmitted in the second mode. Alternatively, in response to the required delay being greater than the delay in transmitting the sensing data through the user plane and greater than the delay in transmitting the sensing data through the control plane, the sensing data can be transmitted in the first mode or the second mode.

In an embodiment, the required parameter is an accuracy parameter. In response to the accuracy in transmitting the sensing data through the control plane being less than the accuracy in transmitting the sensing data through the user plane, the sensing data can be transmitted in the second mode. Alternatively, in response to the accuracy in transmitting the sensing data through the control plane being greater than the accuracy in transmitting the sensing data through the user plane, the sensing data can be transmitted in the first mode.

In an embodiment, the required parameter is a delay parameter. In response to the required accuracy being less than the accuracy in transmitting the sensing data through the user plane and greater than the accuracy in transmitting the sensing data through the control plane, the sensing data can be transmitted in the second mode. Alternatively, in response to the required accuracy being greater than the accuracy in transmitting the sensing data through the user plane and less than the accuracy in transmitting the sensing data through the control plane, the sensing data can be transmitted in the first mode. Alternatively, in response to the required accuracy being greater than the accuracy in transmitting the sensing data through the user plane and greater than the accuracy in transmitting the sensing data through the control plane, the sensing data can be transmitted in the first mode or the second mode.

It should be noted, those skilled in the art may understand that the method provided in the embodiments of the present disclosure may be executed alone or together with some methods in the embodiments of the present disclosure or some methods in related technologies.

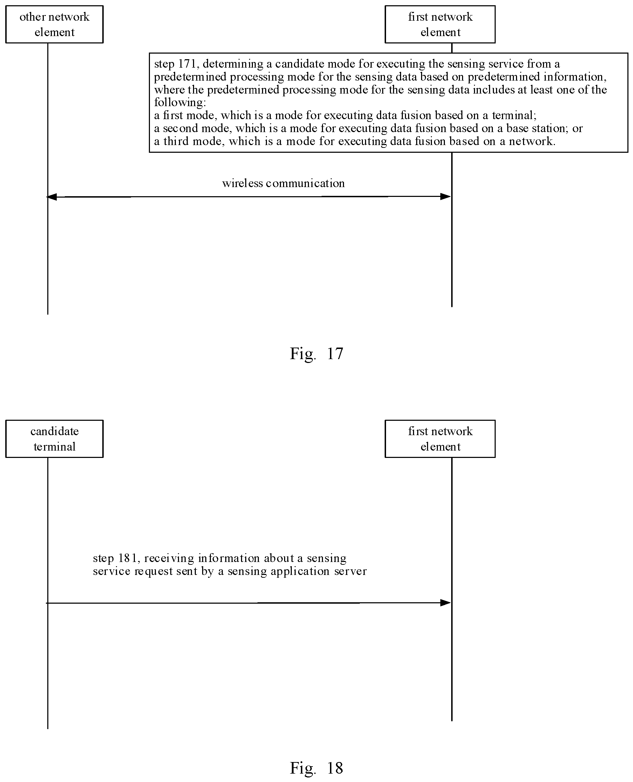

As shown in FIG. 17, a method for processing a sensing service is provided in an embodiment, where the method is performed by a first network element, and the method includes:
step 171, determining a candidate mode for executing the sensing service from a predetermined processing mode for the sensing data based on predetermined information, where the predetermined processing mode for the sensing data includes at least one of the following:
a first mode, which is a mode for processing sensing data based on a terminal;
a second mode, which is a mode for processing sensing data based on a base station; or
a third mode, which is a mode for processing sensing data based on a network.

In an embodiment, the predetermined information includes at least one of the following:
service authorization information of the terminal or base station;
user consent information;
information about the capability and/or current status of the terminal, base station, or core network;
information about the sensing service request;
information about the pre-configured processing mode for the sensing data allowed by the operator.

In an embodiment, the information about the capability and/or current status of the terminal is stored in UDM as part of the subscription data of the terminal.

In an embodiment, the information about the capability and/or current status of the terminal is stored in AMF as a terminal context.

In an embodiment, the first network element may obtain the information about the capability and current status of the terminal from UDM or AMF.

In an embodiment, the service authorization information of the terminal and/or the user consent information is stored in UDM as part of the subscription data of the terminal.

In an embodiment, the capability of the base station may be obtained from AMF. In an embodiment, AMF obtains the capability of the base station in a N2 node layer process.

In an embodiment, the first network element pre-configures the capability of the core network element.

In an embodiment, in response to the service authorization information of the terminal indicating that the predetermined terminal is authorized to execute the sensing service, it is determined that the predetermined terminal can be used as the execution entity of the sensing service. The candidate mode for processing sensing data from different sources is determined to be the first mode, where the terminal that executes the sensing service based on the first mode is the predetermined terminal.

In an embodiment, in response to the service authorization information of the base station indicating that the predetermined base station is authorized to execute the sensing service, it is determined that the predetermined base station can be used as the execution entity of the sensing service. The candidate mode for processing sensing data from different sources is determined to be the second mode, where the base station that executes the sensing service based on the second mode is the predetermined base station.

In an embodiment, the user consent information indicates that the predetermined terminal is allowed to be a transmitter and/or a receiver, and it is determined that the predetermined base station can be used as a transmitter and/or a receiver; and the candidate mode for processing sensing data from different sources is determined, where the transmitter and/or the receiver corresponding to the candidate mode is the predetermined terminal.

In an embodiment, the information about the capability and/or current load of the terminal indicates that the capability of the predetermined terminal can execute the sensing service, and it is determined that the predetermined terminal can be used as the execution entity of the sensing service. The candidate mode for processing sensing data from different sources is determined to be the first mode, where the terminal that executes the sensing service based on the first mode is the predetermined terminal. Alternatively, the information about the capability and/or current load of the terminal indicates that the load of the predetermined terminal can execute the sensing service, and it is determined that the predetermined terminal can be used as the execution entity of the sensing service. The candidate mode for processing sensing data from different sources is determined to be the first mode, where the terminal that executes the sensing service based on the first mode is the predetermined terminal.

In an embodiment, the information about the capability and/or current load of the base station indicates that the capability of the predetermined base station can execute the sensing service, and it is determined that the predetermined base station can be used as the execution entity of the sensing service. The candidate mode for processing sensing data from different sources is determined to be the second mode, where the base station that executes the sensing service based on the second mode is the predetermined base station. Alternatively, the information about the capability and/or current load of the base station indicates that the load of the predetermined base station can execute the sensing service, and it is determined that the predetermined base station can be used as the execution entity of the sensing service. The candidate mode for processing sensing data from different sources is determined to be the second mode, where the base station that executes the sensing service based on the first mode is the predetermined base station.

In an embodiment, the information about the capability and/or current load of the core network element indicates that the capability of the predetermined core network element can execute the sensing service, and it is determined that the predetermined core network element can be used as the execution entity of the sensing service. The candidate mode for processing sensing data from different sources is determined to be the third mode, where the core network element that executes the sensing service based on the third mode is the predetermined core network element. Alternatively, the information about the capability and/or current load of the core network element indicates that the load of the predetermined core network element can execute the sensing service, and it is determined that the predetermined core network element can be used as the execution entity of the sensing service. The candidate mode for processing sensing data from different sources is determined to be the third mode, where the core network element that executes the sensing service based on the first mode is the predetermined core network element.

In an embodiment, the information about the sensing service request is a multi-element sensing information request. The multi-element sensing information request indicates that the predetermined terminal can execute the sensing service, and it is determined that the predetermined terminal can be used as the execution entity of the sensing service. The candidate mode for processing sensing data from different sources is determined to be the first mode, where the terminal that executes the sensing service based on the first mode is the predetermined terminal.

In an embodiment, the information about the sensing service request is a multi-element sensing information request. The multi-element sensing information request indicates that the predetermined application server can execute the sensing service, and it is determined that the predetermined application server can be used as the execution entity of the sensing service. The candidate mode for processing sensing data from different sources is determined to be the third mode, where the application server that executes the sensing service based on the third mode is the predetermined application server.

In an embodiment, the information about the sensing service request is a direct indication about the sensing service request. The direct indication about the sensing service request indicates that the predetermined entity can execute the sensing service, and it is determined that the predetermined entity can be used as the execution entity for executing the sensing service. The candidate mode for processing sensing data from different sources is determined to be a mode which is determined based on the predetermined entity. The execution entity which executes the sensing service based on the mode is the predetermined execution entity.

In an embodiment, the information about the sensing service request is a high QoS sensing result request. According to the requirement in requesting QoS sensing result indicated by the high QoS sensing result request, it is determined that the predetermined entity can be used as the execution entity for executing the sensing service. The candidate mode for processing sensing data from different sources is determined to be a mode which is determined based on the predetermined execution entity. The execution entity for executing the sensing service based on the mode is the predetermined execution entity.

In an embodiment, the information about the sensing service request is service mode preference information. According to the predetermined service mode indicated by the service mode preference information, a candidate mode for processing sensing data from different sources is determined. As an example, the candidate mode is the predetermined service mode.

In an embodiment, the information about the sensing service request is the pre-configured service mode information allowed by the operator. According to the predetermined service mode indicated by the pre-configured service mode information allowed by the operator, a candidate mode for processing sensing data from different sources is determined. As an example, the candidate mode is the predetermined service mode.

In an embodiment, a candidate mode for processing sensing data from different sources is determined from a predetermined processing mode for the sensing data. The transmission mode for transmitting sensing data is determined. The sensing data is data from at least one source transmitted during the execution of the sensing service. The transmission mode is a mode determined from a first mode for transmitting sensing data based on a control plane and a second mode for transmitting sensing data based on a user plane. **In** the process of executing the sensing service based on the candidate mode, each execution entity transmits the sensing data based on the determined transmission mode.

It should be noted, those skilled in the art may understand that the method provided in the embodiments of the present disclosure may be performed alone or together with some methods in the embodiments of the present disclosure or some methods in related technologies.

As shown in FIG. 18, a method for processing a sensing service is provided in an embodiment, where the method is performed by a first network element, and the method includes:
step 181, receiving information about a sensing service request sent by a sensing application server.

In an embodiment, information about a sensing service request sent by a sensing application server is received. Based on the information about the sensing service request, a candidate mode for executing the sensing service is determined from a predetermined processing mode for the sensing data. A transmission mode for transmitting sensing data is determined. The sensing data is data from different sources transmitted during the execution of the sensing service. The transmission mode is a mode determined from a first mode for transmitting sensing data based on a control plane and a second mode for transmitting sensing data based on a user plane. In the process of executing the sensing service based on the candidate mode, each execution entity transmits the sensing data based on the determined transmission mode.

It should be noted, those skilled in the art may understand that the method provided in the embodiments of the present disclosure may be performed alone or together with some methods in the embodiments of the present disclosure or some methods in related technologies.

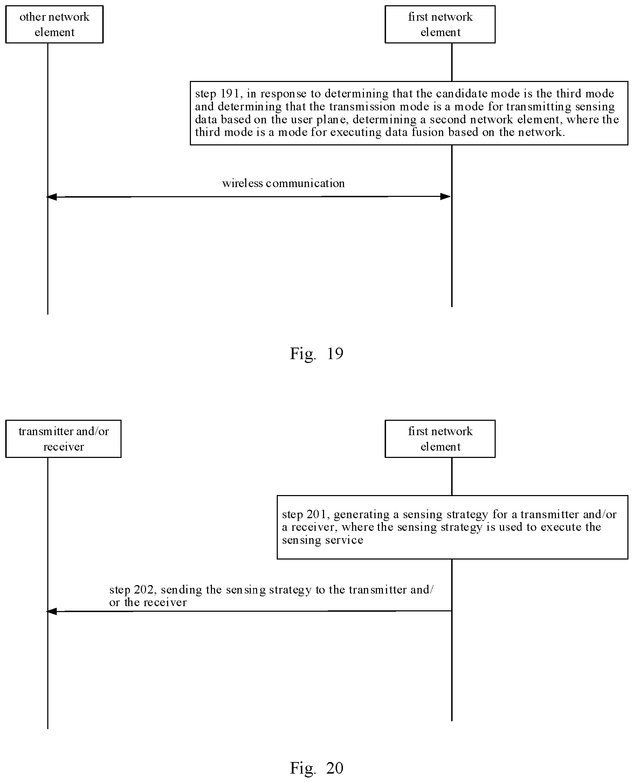

As shown in FIG. 19, a method for processing a sensing service is provided in an embodiment, where the method is performed by a first network element, and the method includes:
step 191, in response to determining that the candidate mode is the third mode and determining that the transmission mode is a mode for transmitting sensing data based on the user plane, determining a second network element, where the third mode is a mode for processing sensing data based on the network.

In an embodiment, a transmission mode for transmitting sensing data is determined. The sensing data is data from at least one source transmitted during the execution of the sensing service. The transmission mode is a mode determined from a first mode for transmitting sensing data based on the control plane and a second mode for transmitting sensing data based on the user plane. In response to determining that the candidate mode is the third mode and determining that the transmission mode is a mode for transmitting sensing data based on the user plane, a second network element is determined, where the third mode is a mode for processing sensing data based on the network. The second network element may be a user plane sensing function. Determining the second network element may include the SF-C selecting a SF-U.

It should be noted, those skilled in the art may understand that the method provided in the embodiments of the present disclosure may be performed alone or together with some methods in the embodiments of the present disclosure or some methods in related technologies.

As shown in FIG. 20, a method for processing a sensing service is provided in an embodiment, where the method is performed by a first network element, and the method includes:
step 201, generating a sensing strategy for a transmitter and/or a receiver, where the sensing strategy is used to execute the sensing service; and
step 202, sending the sensing strategy to the transmitter and/or the receiver.

In an embodiment, a candidate mode for processing sensing data from different sources is determined from a predetermined processing mode for the sensing data. A transmission mode for transmitting sensing data is determined. The sensing data is data from at least one source transmitted during the execution of the sensing service. The transmission mode is a mode determined from a first mode for transmitting sensing data based on a control plane and a second mode for transmitting sensing data based on a user plane. In response to determining that the candidate mode is a third mode and determining that the transmission mode is a mode for transmitting sensing data based on the user plane, a second network element is determined, where the third mode is a mode for processing sensing data based on a network. A predetermined sensing mode, a transmitter and/or a receiver are determined. A sensing strategy for a transmitter and/or a receiver is generated, where the sensing strategy is used to execute the sensing service. The sensing strategy is sent to the transmitter and/or the receiver. It should be noted that the sensing data from different sources may be sensing data acquired by different receivers, where the receiver may be a terminal and/or a base station, etc.

In an embodiment, the sensing strategy indicates a candidate mode and a transmission mode.

It should be noted, a person skilled in the art may understand that the method provided in the embodiments of the present disclosure may be performed alone or together with some methods in the embodiments of the present disclosure or some methods in related technologies.

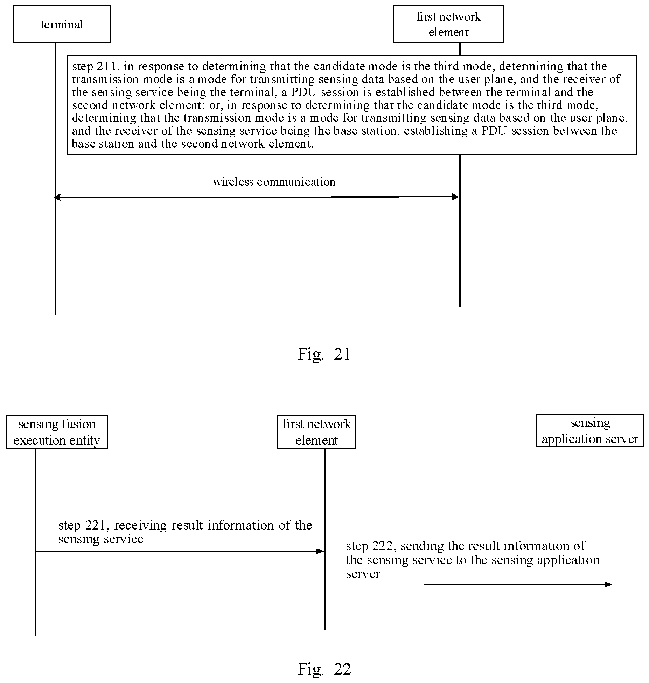

As shown in FIG. 21, a method for processing a sensing service is provided in the present embodiment, wherein the method is executed by a first network element, and the method includes:
step 211, in response to determining that the candidate mode is the third mode, determining that the transmission mode is a mode for transmitting sensing data based on the user plane, and the receiver of the sensing service being the terminal, a PDU session is established between the terminal and the second network element. Alternatively, in response to determining that the candidate mode is the third mode, determining that the transmission mode is a mode for transmitting sensing data based on the user plane, and the receiver of the sensing service being the base station, a PDU session is established between the base station and the second network element.

In an embodiment, a candidate mode for processing sensing data from different sources is determined from a predetermined processing mode for the sensing data. The transmission mode for transmitting sensing data is determined. The sensing data is data from different sources transmitted during the execution of the sensing service. The transmission mode is a mode determined from a first mode for transmitting sensing data based on a control plane and a second mode for transmitting sensing data based on a user plane. In response to determining that the candidate mode is the third mode and determining that the transmission mode is a mode for transmitting sensing data based on the user plane, a second network element is determined, where the third mode is a mode for processing sensing data based on a network. In response to determining that the candidate mode is the third mode, determining that the transmission mode is a mode for transmitting sensing data based on the user plane, and the receiver of the sensing service being a terminal, a PDU session is established between the terminal and the second network element. Data transmission is performed during the execution of the sensing service based on the PDU session.

In an embodiment, a candidate mode for processing sensing data from different sources is determined from a predetermined processing mode for the sensing data. The transmission mode for transmitting sensing data is determined. The the sensing data is data from at least one source transmitted during the execution of the sensing service. The transmission mode is a mode determined from a first mode for transmitting sensing data based on a control plane and a second mode for transmitting sensing data based on a user plane. In response to determining that the candidate mode is the third mode and determining that the transmission mode is a mode for transmitting sensing data based on the user plane, a second network element is determined, where the third mode is a mode for processing sensing data based on the network. In response to determining that the candidate mode is the third mode, determining that the transmission mode is a mode for transmitting sensing data based on the user plane, and the receiver of the sensing service being a base station, a PDU session is established between the base station and the second network element. Data transmission is performed during the execution of the sensing service based on the PDU session.

It should be noted, those skilled in the art may understand that the method provided in the embodiments of the present disclosure may be performed alone or together with some methods in the embodiments of the present disclosure or some methods in related technologies.

As shown in FIG. 22, a method for processing a sensing service is provided in an embodiment, where the method is performed by a first network element, and the method includes:
step 221, receiving result information of the sensing service; and
step 222, sending result information of the sensing service to a sensing application server.

In an embodiment, a candidate mode for processing sensing data from different sources is determined from a predetermined processing mode for the sensing data. The transmission mode for transmitting sensing data is determined. The sensing data is data from different sources transmitted during the execution of the sensing service. The transmission mode is a mode determined from a first mode for transmitting sensing data based on a control plane and a second mode for transmitting sensing data based on a user plane. In the process of executing the sensing service based on the candidate mode, each execution entity transmits the sensing data based on the determined transmission mode. The result information of the sensing service is received. The result information of the sensing service is sent to the sensing application server.

It should be noted, those skilled in the art may understand that the method provided in the embodiments of the present disclosure may be performed alone or together with some methods in the embodiments of the present disclosure or some methods in related technologies.

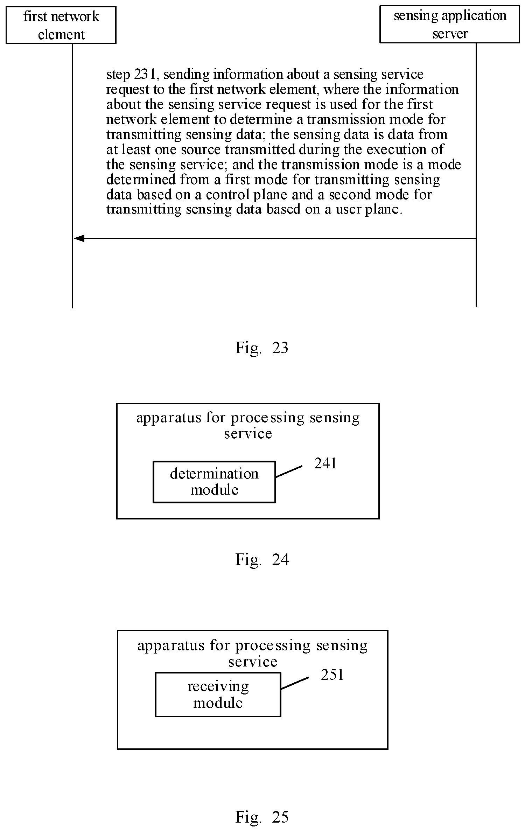

As shown in FIG. 23, a method for processing a sensing service is provided in an embodiment, where the method is performed by a third network element, and the method includes:
step 231, sending information about a sensing service request to the first network element.

The information about the sensing service request is used for the first network element to determine a transmission mode for transmitting sensing data. The sensing data is data from at least one source transmitted during the execution of the sensing service. The transmission mode is a mode determined from a first mode for transmitting sensing data based on a control plane and a second mode for transmitting sensing data based on a user plane.

In an embodiment, the third network element is a sensing application server. The sensing application server sends information about a sensing service request to the first network element. The first network element determines a candidate mode for processing sensing data from different sources from a predetermined processing mode for the sensing data. The first network element determines a transmission mode for transmitting sensing data. The sensing data is data from at least one source transmitted during the execution of the sensing service. The transmission mode is a mode determined from a first mode for transmitting sensing data based on a control plane and a second mode for transmitting sensing data based on a user plane. **In** the process of executing the sensing service based on the candidate mode, each execution entity transmits sensing data based on the determined transmission mode. The first network element receives the result information of the sensing service. The first network element sends the result information of the sensing service to the sensing application server. The sensing application server receives the result information of the sensing service.

As shown in FIG. 24, an apparatus for processing a sensing service is provided in an embodiment, where the apparatus includes:
a determination module 241, configured to determine the transmission mode for transmitting sensing data.

The sensing data is data from at least one source transmitted during the execution of the sensing service. The transmission mode is a mode determined from a first mode for transmitting sensing data based on a control plane and a second mode for transmitting sensing data based on a user plane.

It should be noted, those skilled in the art may understand that the method provided in the embodiments of the present disclosure may be performed alone or together with some methods in the embodiments of the present disclosure or some methods in related technologies.

As shown in FIG. 25, an apparatus for processing a sensing service is provided in an embodiment of the present disclosure, where the apparatus includes:
a sending module 251, configured to send information about a sensing service request to a first network element.

The information about the sensing service request is used for the first network element to determine a transmission mode for transmitting sensing data. The sensing data is data from at least one source transmitted during the execution of the sensing service. The transmission mode is a mode determined from a first mode for transmitting sensing data based on a control plane and a second mode for transmitting sensing data based on a user plane.

It should be noted, a person skilled in the art may understand that the method provided in the embodiments of the present disclosure may be performed alone or together with some methods in the embodiments of the present disclosure or some methods in related technologies.

In order to better understand the embodiments of the present disclosure, the technical solution of the present disclosure is further described below through an example embodiment.

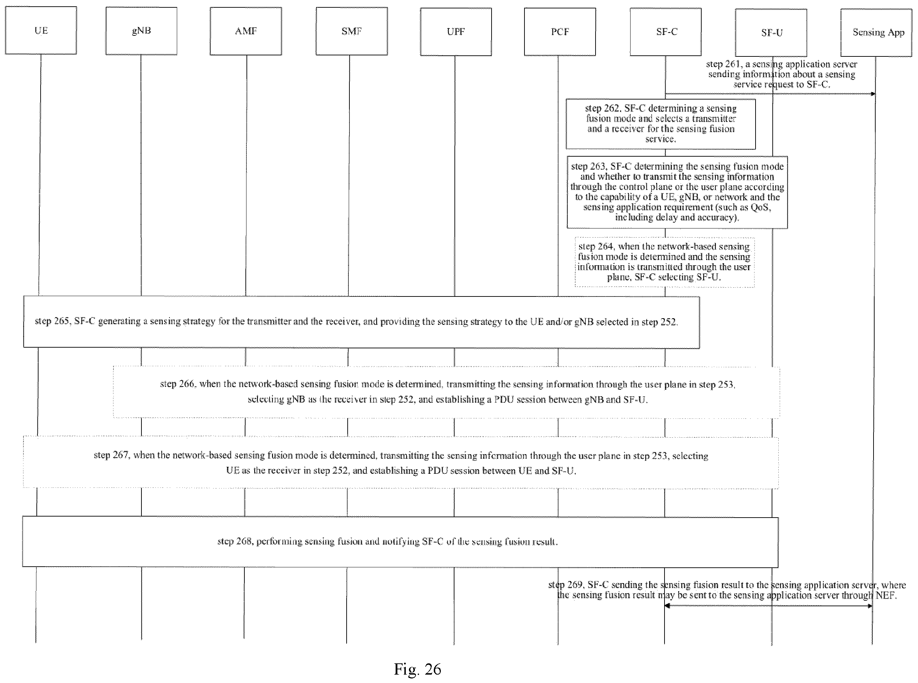

As an example, reference is made to FIG. 26, which provides a method for processing a sensing service, including the following steps.

In step 261, a sensing application server sends information about a sensing service request to SF-C. The sensing service request may be sent by the sensing application server to SF-C via NEF. It should be noted that the sensing application server will also receive a response message.

In step 262, SF-C determines a sensing fusion mode (corresponding to a candidate mode) and selects a transmitter and a receiver for the sensing fusion service.

In step 263, SF-C determines the sensing fusion mode and whether to transmit the sensing information through the control plane or the use plane according to the capability of a UE, gNB, or network and the sensing application requirement (such as QoS, including delay and accuracy).

In step 264, when the network-based sensing fusion mode is determined and the sensing information is transmitted through the user plane, SF-C selects SF-U.

In step 265, SF-C generates a sensing strategy for the transmitter and the receiver, and provides the sensing strategy to the UE and/or gNB selected in step 252.

In step 266, when the network-based sensing fusion mode is determined, the sensing information is transmitted through the user plane in step 253, gNB is selected as the receiver in step 252, and a PDU session is established between gNB and SF-U.

In step 267, when the network-based sensing fusion mode is determined, the sensing information is transmitted through the user plane in step 253, UE is selected as the receiver in step 252, and a PDU session is established between UE and SF-U.

In step 268, sensing fusion is performed and SF-C is notified of the sensing fusion result.

In step 269, SF-C sends the sensing fusion result to the sensing application server. The sensing fusion result may be sent to the sensing application server through NEF.

An embodiment of the present disclosure provides a communication device. The communication device includes: a processor, and a memory for storing executable instructions of the processor.

The processor is configured to implement the method applied to any embodiment of the present disclosure when running the executable instructions.

The processor may include various types of storage media. The storage medium is a non-transitory computer storage medium, and can continue to keep the information stored thereon after the communication device loses power.

The processor may be connected to the memory through a bus, etc., for reading the executable program stored on the memory.

An embodiment of the present disclosure also provides a computer storage medium. The computer storage medium stores a computer executable program, and the executable program implements the method in any embodiment of the present disclosure when executed by the processor.

Regarding the device in the above embodiments, the specific implementations in which each module performs the operation has been described in detail in the embodiments of the method, and will not be elaborated here.

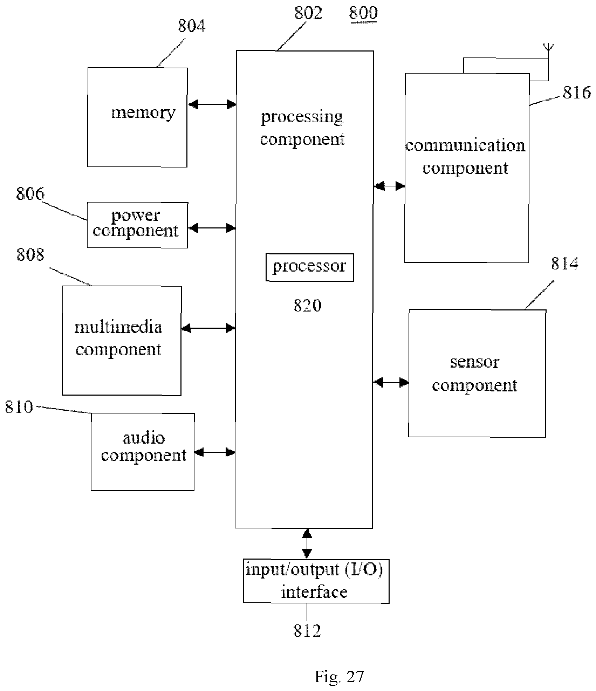

As shown in FIG. 27, an embodiment of the present disclosure provides a structure of a terminal.

With reference to the terminal 800 shown in FIG. 27, an embodiment provides a terminal 800, which may be a mobile phone, a computer, a digital broadcast terminal, a message transceiver, a game console, a tablet device, a medical device, a fitness device, a personal digital assistant, etc.

Refernce may be made to FIG. 27, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the terminal 800, such as operations associated with display, phone calls, data communications, camera operations, and recording operations. The processing component 802 may include one or more processors 820 to execute instructions to complete all or part of the steps in the above-mentioned method. In addition, the processing component 802 may include one or more modules to facilitate interactions between the processing component 802 and other components. For example, the processing component 802 may include a multimedia module to facilitate interactions between the multimedia component 808 and the processing component 802.

The memory 804 is configured to store various types of data to support operations on the device 800. Examples of such data include instructions for any application or method operating on the terminal 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 806 provides power to various components of the terminal 800. The power component 806 may include a power management system, one or more power supplies, and other components associated with generating, managing and distributing power for the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of a touch or slide action, but also detect the duration and pressure associated with the touch or slide operation. **In** some embodiments, the multimedia component 808 includes a front camera and/or a rear camera. When the device 800 is in an operating mode, such as a shooting mode or a video mode, the front camera and/or the rear camera can receive external multimedia data. Each of the front camera and the rear camera may be a fixed optical lens system or have a focal length and optical zooming capability.

The audio component 810 is configured to output and/or input audio signals. For example, the audio component 810 includes a microphone (MIC). When the terminal 800 is in an operating mode, such as a call mode, a recording mode, and a voice recognition mode, the microphone is configured to receive an external audio signal. The received audio signal may be further stored in the memory 804 or sent via the communication component 816. **In** some embodiments, the audio component 810 also includes a speaker for outputting audio signals.

The I/O interface 812 provides an interface between the processing component 802 and the peripheral interface module, which may be a keyboard, a click wheel, a button, etc. These buttons may include, but are not limited to, a home button, a volume button, a start button, and a lock button.

The sensor component 814 includes one or more sensors for providing various aspects of status assessment for the terminal 800. For example, the sensor component 814 may detect the on/off state of the device 800, the relative positioning among components, such as the display and keypad of the terminal 800. The sensor component 814 may also detect the position change of the terminal 800 or a component of the terminal 800, the presence or absence of user contact with the terminal 800, the orientation or acceleration/deceleration of the terminal 800, and the temperature change of the terminal 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 may access a wireless network based on a communication standard, such as Wi-Fi, 2G or 3G, or a combination thereof. In an example embodiment, the communication component 816 receives a broadcast signal or broadcast-related information from an external broadcast management system via a broadcast channel. In an example embodiment, the communication component 816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an example embodiment, the terminal 800 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above method(s).

In an example embodiment, a non-transitory computer-readable storage medium including instructions is also provided, such as a memory 804 including instructions. The above instructions may be executed by the processor 820 of the terminal 800 to complete the above method(s). For example, the non-transitory computer-readable storage medium may be a ROM, a random access memory (RAM), a CD-ROM, a magnetic tape, a floppy disk, and an optical data storage device.

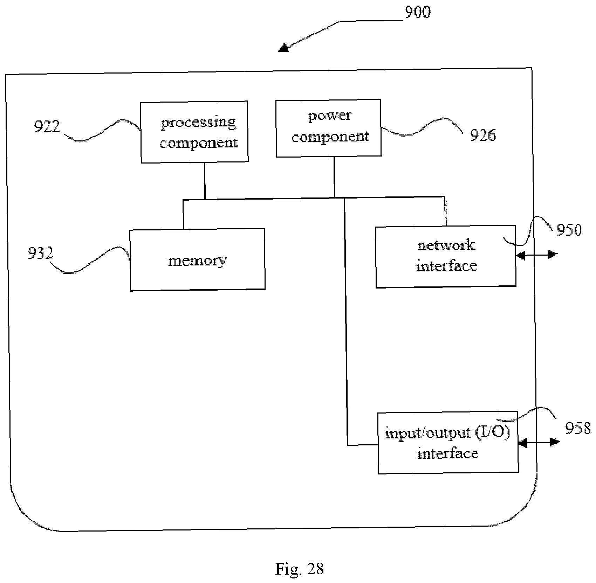

As shown in FIG. 28, an embodiment of the present disclosure shows a structure of a base station. For example, the base station 900 may be provided as a network-side device. 28. With reference to FIG. 28, the base station 900 includes: a processing component 922, which further includes one or more processors; and a memory resource represented by a memory 932 for storing instructions executable by the processing component 922, such as an application. The application stored in the memory 932 may include one or more modules each corresponding to a set of instructions. In addition, the processing component 922 is configured to execute instructions to perform any method among the aforementioned methods applied to the base station.

The base station 900 may also include: a power component 926 configured to perform power management for the base station 900; a wired or wireless network interface 950 configured to connect the base station 900 to the network; and an input/output (I/O) interface 958. The base station 900 may operate based on an operation system stored in the memory 932, such as Windows Server TM, Mac OS XTM, UnixTM, LinuxTM, FreeBSDTM, or the like.

Other embodiments of the present disclosure will be readily apparent to those skilled in the art after considering the specification and practicing the content disclosed herein. The present disclosure is intended to cover any variation, use, or adaptation of the present disclosure that follows the general principles of the present disclosure and includes common knowledge or customary techniques in the art that are not disclosed in the present disclosure. The description and examples are to be regarded as examples only, and the true scope and spirit of the present disclosure are indicated by the following claims.

It should be understood that the present disclosure is not limited to the precise structure described above and shown in the accompanying drawings, and various modifications and changes may be made without departing from the scope thereof. The scope of the present disclosure is limited only by the appended claims.

## Claims

1. A method for processing a sensing service, wherein the method is performed by a first network element and comprises:
determining a transmission mode for transmitting sensing data, wherein
the sensing data is data from at least one source transmitted during execution of the sensing service; and
the transmission mode is a mode determined from a first mode for transmitting the sensing data based on a control plane and a second mode for transmitting the sensing data based on a user plane.

2. The method according to claim 1, wherein determining the transmission mode for transmitting the sensing data comprises:
determining the transmission mode for transmitting the sensing data according to predetermined information.

3. The method according to claim 2, wherein the method further comprises:
determining, based on the predetermined information, a candidate mode for executing the sensing service from a predetermined processing mode for the sensing data, wherein the predetermined processing mode for the sensing data comprises at least one of:
a first mode for processing the sensing data based on a terminal;
a second mode for processing the sensing data based on a base station; or
a third mode for processing the sensing data based on a network.

4. The method according to any one of claims 2 and 3, wherein the predetermined information comprises at least one of:
service authorization information of a terminal or a base station;
user consent information;
information about capability and/or current status of the terminal, the base station, or a core network;
information about a sensing service request; or
information about a pre-configured processing mode for the sensing data allowed by an operator.

5. The method according to claim 4, wherein the method further comprises:
receiving the information about the sensing service request sent by a sensing application server.

6. The method according to claim 3, wherein the method further comprises:
in response to determining that the candidate mode is the third mode and determining that the transmission mode is the mode for transmitting the sensing data based on the user plane, determining a second network element, wherein the third mode is a mode based on network processing.

7. The method according to claim 3, wherein the method further comprises:
determining a predetermined sensing mode, a transmitter and/or a receiver.

8. The method according to claim 7, wherein the method further comprises:
generating a sensing strategy for the transmitter and/or the receiver, wherein the sensing strategy is used to execute the sensing service; and
sending the sensing strategy to the transmitter and/or the receiver.

9. The method according to claim 3, wherein the method further comprises:
in response to determining that the candidate mode is the third mode, determining that the transmission mode is the mode for transmitting the sensing data based on the user plane, and a receiver of the sensing service being a terminal, establishing a PDU session between the terminal and the second network element; or
in response to determining that the candidate mode is the third mode, determining that the transmission mode is the mode for transmitting the sensing data based on the user plane, and the receiver of the sensing service being a base station, establishing a PDU session between the base station and the second network element.

10. The method according to claim 1, wherein the method further comprises:
receiving result information of the sensing service.

11. The method according to claim 10, wherein the method further comprises:
sending the result information of the sensing service to a sensing application server.

12. A method for processing a sensing service, wherein the method is performed by a third network element and comprises:
sending information about a sensing service request to a first network element, wherein
the information about the sensing service request is used for the first network element to determine a transmission mode for transmitting sensing data;
the sensing data is data from at least one source transmitted during execution of the sensing service; and
the transmission mode is a mode determined from a first mode for transmitting the sensing data based on a control plane and a second mode for transmitting the sensing data based on a user plane.

13. The method according to claim 12, wherein the method further comprises:
receiving result information of the sensing service.

14. An apparatus for processing a sensing service, wherein the apparatus comprises:
a determination module, configured to determine a transmission mode for transmitting sensing data, wherein
the sensing data is data from at least one source transmitted during execution of the sensing service; and
the transmission mode is a mode determined from a first mode for transmitting the sensing data based on a control plane and a second mode for transmitting the sensing data based on a user plane.

15. An apparatus for processing a sensing service, wherein the apparatus comprises:
a sending module, configured to send information about a sensing service request to a first network element, wherein
the information about the sensing service request is used for the first network element to determine a transmission mode for transmitting sensing data;
the sensing data is data from at least one source transmitted during execution of the sensing service; and
the transmission mode is a mode determined from a first mode for transmitting the sensing data based on a control plane and a second mode for transmitting the sensing data based on a user plane.

16. A communication device, comprising:
a memory; and
a processor connected to the memory, configured to execute computer executable instructions stored on the memory and implement the method according to any one of claims 1 to 11 or 12 to 13.

17. A computer storage medium, having computer executable instructions stored thereon, wherein the computer executable instructions are configured to implement the method according to any one of claims 1 to 11 or 12 to 13 when executed by the processor.
